# EUROPEAN PATENT APPLICATION

(11) **EP 0 612 477 A1**
(43) Date of publication of application: **31.08.1994**
(21) Application number: 94200348.4
(22) Date of filing: 16.02.1994
(51) Int. Cl.: A21D 6/00, A21D 2/18, A21D 2/22, A21D 2/16

(54) **A method for the production of frozen bread dough**

(30) Priority: 26.02.1993 IT MI930382
(71) Applicant: BARILLA G. e R. F.lli - Società per Azioni, I-43100 Parma (IT)
(72) Inventor: Haegens, Noel, B-9080 Lochristi (BE); Calo, Guido, I-31015 Conegliano (Treviso) (IT)
(74) Representative: Vannini, Torquato

(57) **Abstract**

A flour and water dough including a dough-improving agent is cut into pieces and left to rise for at least 90 minutes.

Subsequently the individual pieces are frozen in an environment at -40°C and then preserved at -20°C.

## Description

The present invention relates in general to a frozen bread dough which has an improved shelf life under frozen storage and is thus very suitable for commercial distribution.

More particularly this invention relates to a method for the production of frozen bread doughs that are cut and shaped to preferred dimensions and forms which are leavened before freezing.

It is well known that a wide variety of frozen bread doughs is available on the market in an equally wide variety of shapes to satisfy the numerous requirements of consumers in this field.

It is equally well known that the greatest problem existing in the production and subsequent commercialisation (distribution and sale) of frozen bread doughs is that of their frozen storage shelf life which varies according to the composition of the dough, the dimensions and shapes of the "bread" made therefrom and, not least, the technique used for the freezing.

In order to increase the frozen storage shelf life of bread doughs, numerous techniques have been suggested and put into practice. One method very widely used provides for the preparation and freezing of a bread dough which has not been allowed to rise, or leaven at all, or has been subject to only slight leavening, so that the yeast incorporated in the dough retains sufficient vitality and a good capacity to form gas (CO₂).

Other methods provide for the partial leavening of the dough before freezing; yet others rely on suitable modifications to conventional dough mixes; for example the use of particular flours with very high protein contents (higher than 16-18%) has been taught or, again, the use of critical quantities of particular yeasts and/or conditioning additives in the dough or agents which inhibit the activity of the yeast during storage of the dough in the frozen state.

It is, however, generally and unfortunately recognised that the bread products obtained from doughs frozen by the methods used up till now have a frozen storage shelf life which is wholly insufficient even when the doughs are cooled to -29°C-30°C, of such doughs thus being unsuitable and unsatisfactory for commercial use (distribution and sale).

The problem at the root of the present invention is that of providing a method for the industrial production of frozen bread doughs which, in all the various shapes and weights in which they may be used, have extremely good stability during frozen storage even over prolonged periods, and considerably better than those usually consumed for the satisfaction of current commercial requirements in the field; the whole without compromising the organoleptic qualities of the bread obtained which must be wholly comparable to conventional, freshly baked bread, even as regards its smell.

This problem is solved according to the present invention by a method for the industrial production of frozen bread doughs, characterised in that it comprises the successive steps of:
- forming a flour and water dough incorporating yeast, salt and a dough-improving agent selected from the group comprising dextrose, acetyltartaric esters of the monodiglycerides of the fatty acids, monodiglycerides of the fatty acids, ascorbic acid and their mixtures,
- after a resting period of 10/15 minutes at 20°C-25°C, cutting the dough into small pieces so as to obtain individual pieces of predetermined weight which are subsequently shaped,
- leavening the individual pieces thus obtained for at least 90 minutes in an environment with a temperature of about 30°C-32°C and a relative humidity of 80%-85%,
- fast-freezing the individual leavened pieces in an environment at -40°C until the centres of the individual pieces have reached a temperature of between 0°C and -4°C, and
- storing the individual frozen pieces at -20°C.

During the kneading of the flour and water, preferably in a 2:1 ratio, to form the dough, it is important to bind the water in the best possible manner.

Indeed free water crystallising during freezing could cause serious damage to the dough structure.

For this purpose, the invention uses a so-called "dough-improving" agent selected from the group of chemical compounds specified above and their mixtures.

The monodiglycerides of the fatty acids, like their acetyltartaric esters, are used to advantage to control the enzymatic stability and activity as well as to limit the quantity of free water present.

Ascorbic acid is used to enhance the strengthening of the mechanical properties of the glutine chains, and hence of the dough, of which they constitute essentially the support structure. The ascorbic acid also gives the dough a better capacity to retain carbon dioxide.

This improving agent has, surprisingly, demonstrated a specific capacity to control the enzymatic stability and activity and to keep these at very low values, as well as a capacity effectively to obstruct the formation of large ice crystals from the very beginning of the rapid freezing of the dough. Certain damage to the internal structure of the dough and, in particular, damage to the cell walls which enclose and retain the carbon dioxide is thus avoided. Consequently, the carbon dioxide cannot escape from the cells and the volume of the dough pieces remains substantially unchanged.

A dough improving agent which is particularly effective for the purposes of the invention is constituted by a suitable mixture of monodiglycerides and/or their esters, ascorbic acid and dextrose.

The best results are achieved when the dough-improving agent is used in quantities of from 2-5% by weight of the weight of the flour used.

After a predetermined period of rest at a temperature of 25°C-27°C, the dough is cut (divided) into small pieces and the individual pieces, suitably and appropriately rounded, are left to rise, or leaven, in a conventional manner, preferably with the leavening extended for about 90 minutes in an environment at 30°C to 32°C and a relative humidity of 85%.

According to a basic aspect of the present invention, the freezing of the individual leavened pieces occurs in two steps.

A first rapid step in an environment at -40°C for the centre of each piece to reach a temperature within the range 0°C to -4°C and a second step in which the temperature is brought to a uniform value of around -20°C, at which values the individual frozen pieces are then stored and kept.

The rapid freezing step is carried out with the double objective of:
- preventing excessive and undesirable surface dehydration of the individual pieces (the slower the cooling, the more intense the dehydration). It is well known that forced surface dehydration compromises the organoleptic qualities of the product;
- not cooling the surfaces of the individual pieces to temperatures below -20°C. Too low cooling temperatures do not allow or, at least substantially obstruct, the homogenous flow of gas from the individual pieces during their baking.

After fourteen days of preservation at -20°C, the dough pieces obtained by the method of the present invention are still perfectly stable while, after baking in the oven, they have all the organoleptic characteristics of bread which has just been prepared, including its incomparable smell.

To this end, the best results were obtained when the baking was preceded by a period of thermal conditioning to bring the frozen dough pieces from -18°C (-20°C) to 5-10°C, over a period of time of not less than about 30 minutes.

This conditioning allowed the surfaces of the individual bread pieces to be cut during baking; the purpose of this cutting is to facilitate the escape of gas in the oven and hence enable a greater evolution.

Furthermore this conditioning reduces the thermal jump between the surface temperature of the individual products and the oven temperature and thus achieves a more homogenous development of the product which, for this reason, still has a crust which is not excessively thick at the end of the baking.

Advantages and further characteristics of the method of the invention will become apparent from the description of one embodiment thereof, given purely by way of non-limitative example in the following examples where the percentages and/or parts are given by weight if not otherwise indicated.

### EXAMPLE 1

100kg of flour with a protein content of 11-12% were mixed into dough with 50 litres of water over a period of 2 minutes with a slow kneader (80 beats per minute) and then for 8 minutes with a fast kneader (150 beats per minute) all at a temperature of about 27°C. During this process, 2.5kg of salt, 2.5kg of yeast and 4kg of a commercially-available dough improving agent which contains, essentially, a vegetable fat (margarine), dextrose, E 471 472f, ascorbic acid, were incorporated in the dough.

After a 10-minute rest period at 25°C, during which the dough was covered with for example a plastics film, the dough was divided into 500g pieces which were then rounded to form loaves which were left to rest for about 20 minutes at a constant temperature of 27°C.

After this rest period, the individual pieces were left to rise for 90 minutes at a temperature of 32°C in an environment with a relative humidity of 85%.

The individual leavened pieces were then fast-frozen by being kept in an environment at -40°C for 35-40 minutes. Thus the centre of each individual piece reached a temperature of -1°C while its surface temperature was about -20°C.

The individual frozen, leavened pieces, packed in respective polythene envelope-wrappers, were stored at -20°C. A short time after the beginning of this storage even the centres of the individual pieces had reached a temperature of about -20°C.

After 14 days of preservation at this temperature of -20°C the loaves were sent to be baked in an oven. Before baking, they were conditioned by a so-called "prebaking" treatment in which they were brought from the temperature of -20°C of freezing to a surface temperature of 6°C-7°C over about 30 minutes.

At this point they were introduced into the oven and baking was carried out with the following time/temperature "diagram" for the oven: 2.5 minutes at 220°C; 12 minutes at 200°C, 20 minutes at 190°C and finally 25 minutes at 180°C.

The loaves leaving the oven had the full fragrance of traditional freshly baked bread while subsequent testing demonstrated that they had all the organoleptic qualities of bread.

### EXAMPLE 2

The method was carried out as in Example 1 with the exception that the dough was divided into 350g pieces and these were subsequently formed into baguettes.

After leavening, the fast freezing step at -40°C to bring the centre of each individual baguette to a temperature of -2°C required a period of 30-35 minutes.

After 15 days of storage at -20°C, the frozen baguettes were shown to be extremely stable whereby they were sent for baking in an oven.

After a thermal conditioning treatment entirely similar to that described in Example 1, baking was completed in accordance with the following time/temperature diagram for the oven: 2.5 minutes at 220°C, 19 minutes at 200°C and 14 minutes at 180°C.

### EXAMPLE 3

The method of example 1 was again repeated with the exception that the dough was divided into 150g pieces which were formed into baton-rolls. The fast freezing step to bring the temperature at the centre of each roll from 28°C in the leavening environment to -1°C in an environment at -40°C required 25-27 minutes.

After the thermal conditioning step which was entirely similar to that of Example 1, the baton rolls were baked in an oven in accordance with the following time/temperature diagram: 3 minutes at 200°C, 3 minutes at 180°C and 15 minutes at 160°C.

### EXAMPLE 4

The method of example 1 was repeated with the exception that 3kg of an improving agent constituted by esters of the monodiglycerides of the fatty acids and ascorbic acid were incorporated and the dough was divided into 50g pieces which were shaped into solid rose-shaped rolls.

The time used for the cooling from 30°C in the leavening environment to -2°C at the centre of each roll in a -40°C environment was 15-20 minutes.

After thermal conditioning entirely similar to that explained previously, the rolls were baked in an oven operated with the following temperature diagram: 3 minutes at 210°C and 15 minutes at 205°C.

### EXAMPLE 5

100kg of wholemeal flour (having an ash content of between 1.4 and 1.6% of the dry weight) was mixed with 50 litres of water and during kneading, which was carried out as specified in Example 1, 2kg of a dough-improving agent constituted essentially by mixed acetyltartaric esters and monodiglycerides, 2.5kg of salt and 2.5kg of yeast were incorporated therein. After resting, the dough was divided into 150g pieces which were shaped into baton-rolls.

After leavening for 90 minutes at 32°C and a relative humidity of 85%, the rolls were fast-frozen in an environment at -40°C. The time needed for the temperature at the centre of each stick to fall from 30°C in the leavening environment to -2°C was 25 minutes.

After a period of pre-baking thermal conditioning, the rolls were baked with the following time/temperature diagram: 3 minutes at 200°C, 15 minutes at 190°C and 18 minutes at 160°C.

The invention thus described can be subject to variations and modifications all of which are within the competence of the expert in the art and as such fall within the scope of protection defined by the claims which follow.

These variants may relate to the range of food additives which can be incorporated in the dough in dependence on the organoleptic and/or dietetic requirements or the nature of the shapes used or even the times and temperatures used for the steps of resting and fermenting the doughs.

## Claims

1. A method for the production of frozen bread dough characterised in that it comprises the successive steps of:
- forming a flour and water dough incorporating yeast, salt and a dough-improving agent selected from the group comprising dextrose, acetyltartaric esters of the monodiglycerides of the fatty acids, monodiglycerides of the fatty acids, ascorbic acid and their mixtures,
- after a resting period of 10/15 minutes at 20⁰C-25⁰C, cutting the dough into small pieces so as to obtain individual pieces of predetermined weight which are subsequently shaped,
- leavening the individual pieces thus obtained for at least 90 minutes in an environment with a temperature of about 30⁰C-32⁰C and a relative humidity of 80%-85%,
- fast-freezing the individual leavened pieces in an environment at -40⁰C over a period of between 15 and 45 minutes until the centre of the individual pieces have reached a temperature of between 0⁰C and -4⁰C, and
- storing the individual frozen pieces at -20⁰C.

2. A method according to Claim 1, characterised in that the dough-improving agent is constituted by a mixture of monodiglycerides and/or their esters, ascorbic acid and dextrose.

3. A method according to Claim 2, characterised in that the dough-improving agent is used in quantities of from 2% to 5% by weight of the weight of the flour used.

4. A method according to Claim 1, characterised in that the dough is formed by initial slow kneading at about 80 beats per minute and subsequent fast kneading at about 150 beats per minute for a longer period of time than the slow kneading.

5. A method according to Claim 3, characterised in that the individual frozen pieces are packaged in plastics wrappers for preservation at -20⁰C.

6. A pre-leavened frozen bread dough obtained by the method of the preceding claims.
